# EUROPEAN PATENT APPLICATION

(11) **EP 2 800 289 A2**
(43) Date of publication of application: **05.11.2014**
(21) Application number: 14165779.1
(22) Date of filing: 24.04.2014
(51) Int. Cl.: H04J 14/02

(54) **Optical transmission apparatus, optical transmission system, and optical transmission method**

(30) Priority: 01.05.2013 JP 2013096635
(71) Applicant: FUJITSU LIMITED, Kawasaki-shi, Kanagawa 211-8588 (JP)
(72) Inventor: Matsukawa, Yoshinobu, Kanagawa, 211-8588 (JP); Nakajima, Ichiro, Kanagawa, 211-8588 (JP)
(74) Representative: Hoffmann Eitle

(57) **Abstract**

An optical transmission apparatus includes a frame demultiplexer configured to demultiplex a frame signal, and a transmission process unit configured to modulate the frame signal demultiplexed by the frame demultiplexer to a plurality of subcarrier signals of different wavelengths and transmit the plurality of subcarrier signals, wherein the transmission process unit switches the subcarrier signal that is one of the plurality of subcarrier signals and at which a failure is detected to a subcarrier signal of a backup wavelength different from wavelengths of the plurality of subcarrier signals.

## Description

### FIELD

The embodiments discussed herein are related to an optical transmission apparatus, an optical transmission system, and an optical transmission method.

### BACKGROUND

With growing demand for telecommunications, multi-level modulation technologies such as dual polarization (DP)-quaternary phase-shift keying (QPSK) and the like are being used in optical transmission. For example, there is a well-known transmission technology that yields coherent transmission and wavelength multiplexing of 100 Gbps optical signal with a single carrier.

To meet a further growing demand for telecommunications, studies are underway to apply a higher degree multi-level modulation scheme such as DP-64 quadrature amplitude modulation (QAM), DP-256QAM, or the like to achieve a larger capacity transmission such as 400 Gbps, 1 Tbps, or the like. However, when such a multi-level modulation scheme is applied in optical communication, a signal-to-noise (SN) ratio may decrease. Thus, there is an issue that the transmission range may become shorter.

Thus, it is hoped that a method, in which multi-level modulation signals are used as subcarrier signals and a plurality of such subcarrier signals are multiplexed by wavelength multiplexing for transmission, may achieve a higher SN ratio and a longer range transmission. A multicarrier signal obtained by multiplexing a plurality of subcarrier signals is sometimes referred to as a 'super channel'. Further, in the present specification, this transmission method will be referred to as a 'multicarrier transmission'.

In the multicarrier transmission, the subcarrier signals have wavelengths that are different from each other, and a spectrum of each wavelength is arranged within a narrow band to increase the transmission capacity. To achieve the foregoing, the multicarrier transmission uses flexible grid capability that enables to have a flexible bandwidth (such as 75 GHz, 137.5 GHz, or the like), instead of a conventional fixed bandwidth (for example, 50 GHz, 100 GHz, or the like). This flexible grid capability is also known as gridless capability and defined by International Telecommunication Union Telecommunication Standardization Sector (ITU-T) Recommendation G. 694.1.

For example, the following transmission schemes are being studied for a 400 Gbps multicarrier signal. (1) A 100 Gbps DP-QPSK modulation signal is used as a subcarrier signal, and four of such subcarrier signals are multiplexed and transmitted. (2) A 200 Gbps DP-16QAM modulation signal is used as a subcarrier signal, and two of such subcarrier signals are multiplexed and transmitted. (3) A 50 Gbps DP-Binary PSK (BPSK) modulation signal is used as a subcarrier, and two of such subcarrier signals are multiplexed and transmitted (for super long distance transmission).

In the multicarrier transmission method, as is the case with an inverse muxing method, a frame signal to be transmitted at 400 Gbps may be, for example, demultiplexed into four subcarrier signals, and the four subcarrier signals are each transmitted at 100 Gbps. Further, the original frame signal is rebuilt from the four subcarrier signals at a receiving side. Thus, when wavelengths and a sequence of transmission lanes for the subcarrier signals do not coincide at the transmitting side and the receiving side, the frame may not be rebuilt, and an alarm such as loss-of-frame (LOF) or the like is issued.

Transmission systems utilizing the multicarrier transmission method transmit a large volume of data. Thus, such transmission systems each include auto protection switching (APS) capability for switching the transmission route in case of failure.

With respect to the APS, Japanese Laid-open Patent Publication No. 2002-84229 discloses a feature such that a transmission apparatus is monitored for failure, and when a failure occurs, a switch arranged on a transmission line of a backup transmission apparatus is turned on, and a switch arranged on a transmission line of a faulty transmission apparatus is turned off. Further, Japanese Laid-open Patent Publication No. 2006-345069 discloses a wavelength reserve method for a backup channel, which achieves common switching among optical paths in an optical ring network that includes a plurality of optical paths having different transmission speeds.

### SUMMARY

Accordingly, it is an object in one aspect of the invention to provide an optical transmission apparatus, an optical transmission system, and an optical transmission method capable of achieving effective recovery from the subcarrier signal failure.

According to an aspect of the invention, an optical transmission apparatus includes: a frame demultiplexer configured to demultiplex a frame signal; and a transmission process unit configured to modulate the frame signal demultiplexed by the frame demultiplexer to a plurality of subcarrier signals of different wavelengths and transmit the plurality of subcarrier signals, wherein the transmission process unit switches the subcarrier signal that is one of the plurality of subcarrier signals and at which a failure is detected to a subcarrier signal of a backup wavelength different from wavelengths of the plurality of subcarrier signals.

### BRIEF DESCRIPTION OF DRAWINGS

FIG. 1 is a configuration diagram of an optical transmission system according to a first comparison example;
FIG. 2 is a configuration diagram of an optical transmission system according to a second comparison example;
FIG. 3 is a configuration diagram of an optical transmission system according to a third comparison example;
FIG. 4 is a configuration diagram of an optical transmission apparatus according to an embodiment;
FIG. 5 is a configuration diagram of an optical transmission system according to an embodiment;
FIG. 6 is a diagram illustrating a state of transmission with subcarrier signals before a failure occurs;
FIG. 7 is a diagram illustrating a state of transmission with subcarrier signals after a failure occurs;
FIG. 8 is a ladder chart of a control process for switching a wavelength of subcarrier signal;
FIG. 9 is a diagram illustrating a transmitting side configuration of an optical transmission apparatus including CDC capability;
FIG. 10 is a diagram illustrating a receiving side configuration of an optical transmission apparatus including CDC capability; and
FIG. 11 is a configuration diagram of an optical transmission apparatus according to another embodiment.

### DESCRIPTION OF EMBODIMENTS

In a wavelength multiplexing transmission apparatus including gridless capability, wavelength control devices such as wavelength selective switches (WSS) and the like perform minute controls. Thus, when a failure occurs, it is possible that the wavelength control device may fall into a state where some of subcarrier signals of certain wavelengths are disconnected. For example, the wavelength selective switch adjusts respective angles of a large number of micro mirrors arranged in an array formation. Thus, when a failure occurs at one of the micro mirrors, the subcarrier signal of the corresponding wavelength is disconnected. When the subcarrier signal having one of the wavelengths is disconnected, the foregoing LOF is detected, and the rebuilding of frame is disabled.

In a ring type network, recovery from a failure is achieved by switching the transmission route by use of, for example, an optical uni-direction path switched ring (OUPSR) system. In the multicarrier transmission method, a backup transmission route retains bands for all the wavelengths of the subcarrier signals to enable recovery whichever wavelength of the subcarrier signal may be disconnected due to failure. This lowers band utilization efficiency in the network. Further, at the receiving side, the subcarrier signal inputted from the backup transmission route and the subcarrier signal inputted from a primary transmission route have delays that are different from each other (namely, latency). Thus, a delay adjustment process is desirable.

Further, in a mesh type network, transmission route switching by use of colorless capability, directionless capability, and contentionless capability are drawing attention. These three capabilities are included in a wavelength multiplexing transmission apparatus and collectively referred to as CDC capability.

The colorless capability allows input of an optical signal of any wavelength at an input port, and allows output of an optical signal of any wavelength from an output port. The directionless capability allows an optical signal to be outputted to any path. The contentionless capability allows input of a plurality of optical signals having the same wavelength. This CDC capability enables to change the transmission route by remote control without any fiber connection change.

However, in the mesh type network, the backup transmission route through which the subcarrier signals are routed is determined in response to a node pattern at the time when a failure occurs. Thus, bands are retained for respective patterns of the backup transmission route. This lowers the band utilization efficiency and reduces flexibility in setting optical signal paths, yielding lower transmission capacity. Accordingly, in the mesh type network, there is an issue that it is difficult to use the foregoing OUPSR system and to secure the backup transmission route for the subcarrier signal having the same wavelength as that of the subcarrier signal at which a failure occurs.

Embodiments of an optical transmission apparatus, an optical transmission system, and an optical transmission method, which enable to achieve effective recovery from the subcarrier signal failure, are now described in detail with reference to the drawings. Note that the disclosed technology is not limited by the following embodiments.

### First Comparison Example

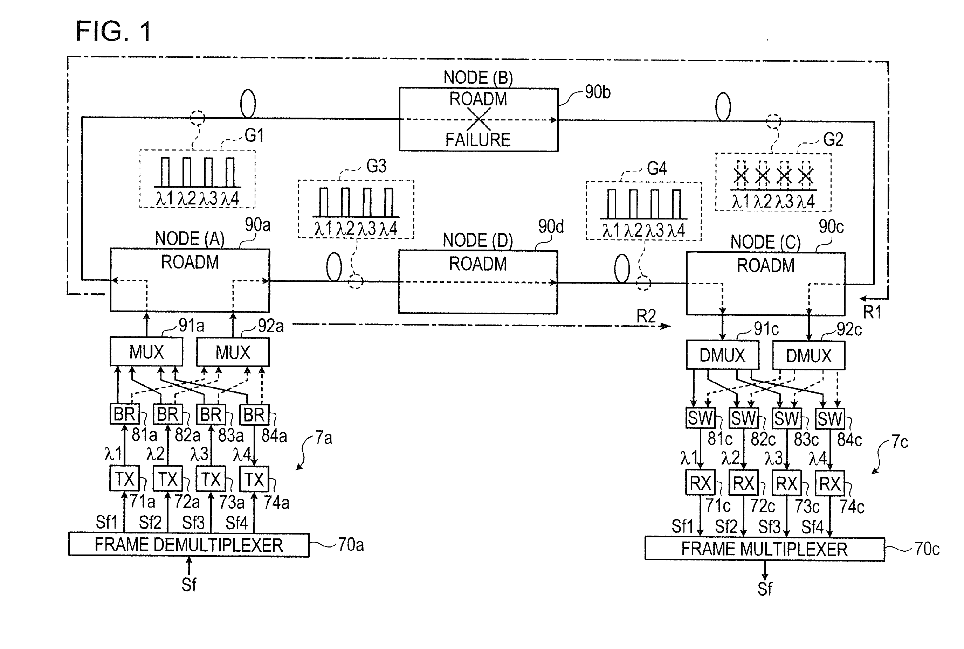

FIG. 1 is a configuration diagram of an optical transmission system according to the first comparison example. The optical transmission system is a network formed by connecting nodes (A) to (D) in a ring formation through optical fibers (transmission route).

The optical transmission system transmits a multicarrier signal (multiplexed optical signal), which is obtained by performing wavelength multiplexing of four subcarrier signals (optical signals) of wavelengths λ1 to λ4, from the node (A) to the node (C) via the node (B) in accordance with the foregoing multicarrier transmission method. The four subcarrier signals of wavelengths λ1 to λ4 may be, for example, a set of signals obtained by demultiplexing a 400 Gbps frame signal.

The nodes (A) to (D) each include an optical transmission apparatus. The optical transmission apparatus multiplexes a plurality of optical signals having different wavelengths to generate a multiplexed optical signal, and transmits the multiplexed optical signal to an adjacent optical transmission apparatus. The optical transmission apparatuses include reconfigurable optical add/drop multiplexer devices (ROADM) 90a to 90d and transponder devices 7a and 7c. The ROADM devices 90a to 90d each include the gridless capability for transmitting the multicarrier signal. Note that illustrations of the transponder device of the nodes (B) and (D) are omitted from the drawing. Further, only a functional configuration at the transmitting side is illustrated for the transponder device 7a of the node (A), and only a functional configuration at the receiving side is illustrated for the transponder device 7c of the node (C).

The transponder device 7a of the node (A) includes a frame demultiplexer 70a and four transmitters (TX) 71a to 74a. The frame demultiplexer 70a demultiplexes an electrical frame signal Sf into four, and generates sub-frame signals Sf1 to Sf4. The frame demultiplexer 70a outputs the sub-frame signals Sf1 to Sf4 thus generated to the corresponding transmitters 71a to 74a. The transmitters 71a to 74a modulates the sub-frame signals Sf1 to Sf4 to subcarrier signals of wavelengths λ1 to λ4, and outputs the subcarrier signals of wavelengths λ1 to λ4 thus modulated.

Two multiplexers (MUX) 91a, 92a and four bridges (BR) 81a to 84a are provided in between the ROADM device 90a and the transponder device 7a. The subcarrier signals of wavelengths λ1 to λ4 are each branched and outputted to the two multiplexers 91a and 92a by the respective bridges 81a to 84a. The multiplexers 91a and 92a each multiplex the subcarrier signals thus inputted and output a multiplexed signal to the ROADM device 90a. The multiplexers 91a and 92a are compatible with the gridless capability to perform the multicarrier transmission.

The ROADM device 90a outputs the subcarrier signal inputted from one of the multiplexers, the multiplexer 91a, to a path directed to the node (B), and the subcarrier signal inputted from the other multiplexers, the multiplexer 92a, to a path directed to the node (D). In this way, the ROADM device 90a secures a primary transmission route R1 and a backup transmission route R2 as subcarrier signal transmission routes. Here, the path is a transmission route segment between adjacent nodes.

The ROADM device 90a multiplexes the subcarrier signals of wavelengths λ1 to λ4 and transmits a resultant signal as a multicarrier signal in accordance with the foregoing multicarrier transmission. According to the gridless capability of the ROADM device 90a, spectra of the subcarrier signals of wavelengths λ1 to λ4 may be, for example, included within a band of 137.5 GHz or 150 GHz.

The multicarrier signal transmitted from the optical transmission apparatus of the node (A) is transmitted to the optical transmission apparatus of the node (C) via the optical transmission apparatus of the node (B) along the primary transmission route R1.

Two demultiplexers (DMUX) 91c, 92c and four switches (SW) 81c to 84c are provided in between the ROADM device 90c and the transponder device 7c of the node (C). The ROADM device 90c outputs the multicarrier signal inputted from a node (B) side path to one of the demultiplexers, the demultiplexer 92c, and the multicarrier signal inputted from a node (D) side path to the other demultiplexer 91c. The ROADM device 90c and the demultiplexers 91c, 92c each include the gridless capability.

The demultiplexers 91c and 92c may be, for example, optical splitters, and split the subcarrier signals of wavelengths λ1 to λ4 inputted from the ROADM device 90c and output to the corresponding switches 81c to 84c. The switches 81c to 84c each select an input source of the multicarrier signal from the two demultiplexers 91c and 92c.

The transponder device 7c of the node (C) includes a frame multiplexer 70c and four receivers (RX) 71c to 74c. The receivers 71c to 74c generate sub-frame signals Sf1 to Sf4 from the multicarrier signal inputted from the switches 81c to 84c by receiving and demodulating the corresponding subcarrier signals of wavelengths λ1 to λ4. In other words, the switches 81c to 84c each select the path to the input source of the subcarrier signal. This allows the transponder device 7c to select the subcarrier signal transmission route from the primary transmission route R1 and the backup transmission route R2.

The receivers 71c to 74a output the sub-frame signals Sf1 to Sf4 thus generated to the frame multiplexer 70c. The frame multiplexer 70c performs wavelength multiplexing of the sub-frame signals Sf1 to Sf4 to rebuild the frame signal Sf. When the wavelengths λ1 to λ4 and the sequence of transmission lanes for the respective subcarrier signals do not coincide with those in the transponder device 7a at the transmitting side, the frame multiplexer 70c is unable to rebuild the frame, and an alarm such as loss-of-frame (LOF) or the like is issued.

As illustrated in a graph G1, the optical transmission apparatus of the node (A) transmits a multicarrier signal to the optical transmission apparatus of the node (C) via the optical transmission apparatus of the node (B) along the primary transmission route R1. Here, suppose that a failure occurs at the transmission apparatus of the node (B), and all the subcarrier signals included in the multicarrier signal are failed in between the node (B) and the node (C) as illustrated in a graph G2.

In this case, in accordance with OUPSR system, the optical transmission system switches the transmission route from the primary transmission route R1 to the backup transmission route R2. At this time, at the node (C), the switches 81c to 84c are changed over from one of the demultiplexers, the demultiplexer 92c, to the other demultiplexer 91c.

Accordingly, the multicarrier signal transmission route is switched, and the optical transmission apparatus of the node (A) transmits a multicarrier signal to the optical transmission apparatus of the node (C) via the optical transmission apparatus of the node (D) along the backup transmission route R2 as illustrated in graphs G3 and G4. In this way, the subcarrier signal failure is recovered.

### Second Comparison Example

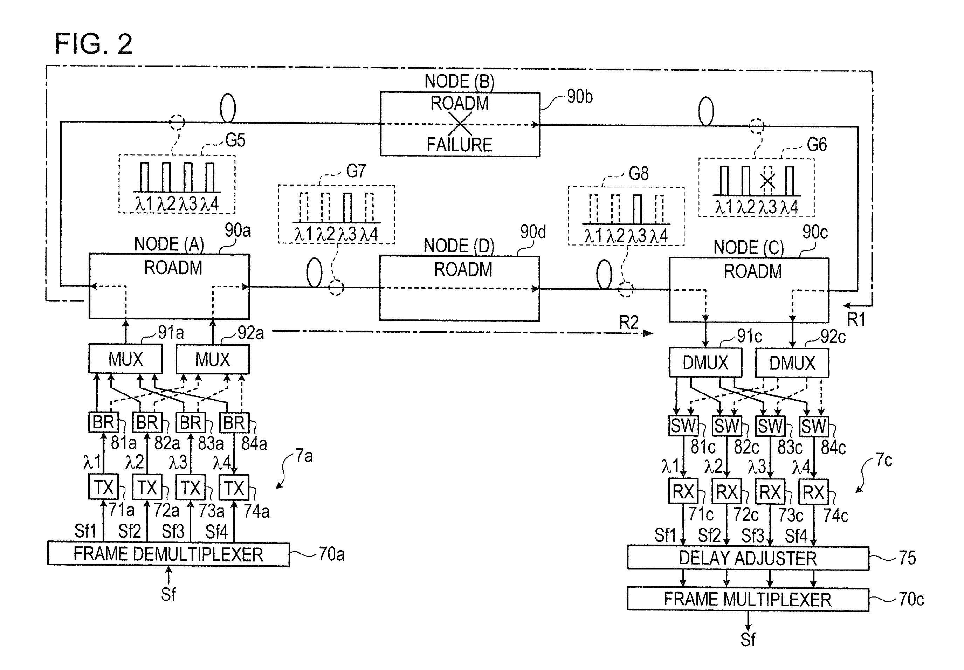

FIG. 2 is a configuration diagram of an optical transmission system according to the second comparison example. In FIG. 2, identical reference numerals designate configuration elements in common with FIG. 1, and descriptions thereof are omitted.

As illustrated in a graph G5, the optical transmission apparatus of the node (A) transmits a multicarrier signal to the optical transmission apparatus of the node (C) via the optical transmission apparatus of the node (B) along the primary transmission route R1. Here, suppose that a failure occurs at the transmission apparatus of the node (B), and, of the subcarrier signals of wavelengths λ1 to λ4, only the subcarrier signal of wavelength λ3 fails in between the node (B) and the node (C) as illustrated in a graph G6. In such a case, for example, the wavelength selective switch provided in the optical transmission apparatus performs a minute wavelength control with the gridless capability. Thus, there may be a case where a certain wavelength light may not be allowed to pass through due to a partial failure.

In this case, in the optical transmission apparatus of the node (C) at the receiving side, the frame multiplexer 70c is unable to obtain the sub-frame signal Sf3 properly due to the failure of the subcarrier signal of wavelength λ3, and an out-of-frame-sync alarm (LOF) is issued. Thus, the frame multiplexer 70 is unable to rebuild the frame signal Sf. In other words, a failure at any one of the subcarrier signals included in the multicarrier signal disables the reception of the whole multicarrier signal.

At that time, no failure occurs at the subcarrier signals of the wavelengths λ1, λ2, and λ4. Thus, only the transmission route for the subcarrier signal of wavelength λ3 is switched to the backup transmission route R2 in accordance with OUPSR system. In other words, at the node (C), the switch 83c corresponding to the wavelength λ3 changes over from one of the demultiplexers, the demultiplexer 92c, to the other demultiplexer 91c.

This allows the optical transmission apparatus of the node (A) to transmit the subcarrier signal of wavelength λ3 to the optical transmission apparatus of the node (C) via the optical transmission apparatus of the node (D) along the backup transmission route R2 as illustrated in graphs G7 and G8. In this case, at the node (C), the subcarrier signal of wavelength λ3 and the other subcarrier signals of wavelengths λ1, λ2, and λ4 have different transmission routes R1 and R2. Thus, there is a difference in delay between the subcarrier signal of wavelength λ3 and the other subcarrier signals of wavelengths λ1, λ2, and λ4. Accordingly, the optical transmission apparatus of the node (C) includes a delay adjuster 75 in between the receivers 71c to 74c and the frame multiplexer 70c for adjusting the delay.

The delay adjuster 75 adjusts delays of the subcarrier signal of wavelength λ3 and the other subcarrier signals of wavelengths λ1, λ2, λ4, and outputs resulting signals to the frame multiplexer 70c. This enables the frame multiplexer 70c to rebuild the frame signal Sf even when the transmission route R2 for the subcarrier signal of the wavelength λ3 is different from that of the other subcarrier signals of the wavelengths λ1, λ2, and λ4. In this way, the subcarrier signal failure is recovered. Further, at this moment, the LOF alarm is called off.

In the present comparison example, only the transmission route for the subcarrier signal of the wavelength λ3 is switched to the backup transmission route R2. However, it is difficult to predict which subcarrier signal may fail due to a failure. Thus, it is desirable to retain bands for all the subcarrier signals of the wavelengths λ1 to λ4 in the backup transmission route R2 in advance to ensure recovery whichever subcarrier signal may fail. This lowers the band utilization efficiency in the network.

Further, in the present comparison example, it is desirable to have the delay adjuster 75 in the optical transmission apparatus of the node (C) at the receiving side. This complicates the configuration of optical transmission apparatus and increases cost.

### Third Comparison Example

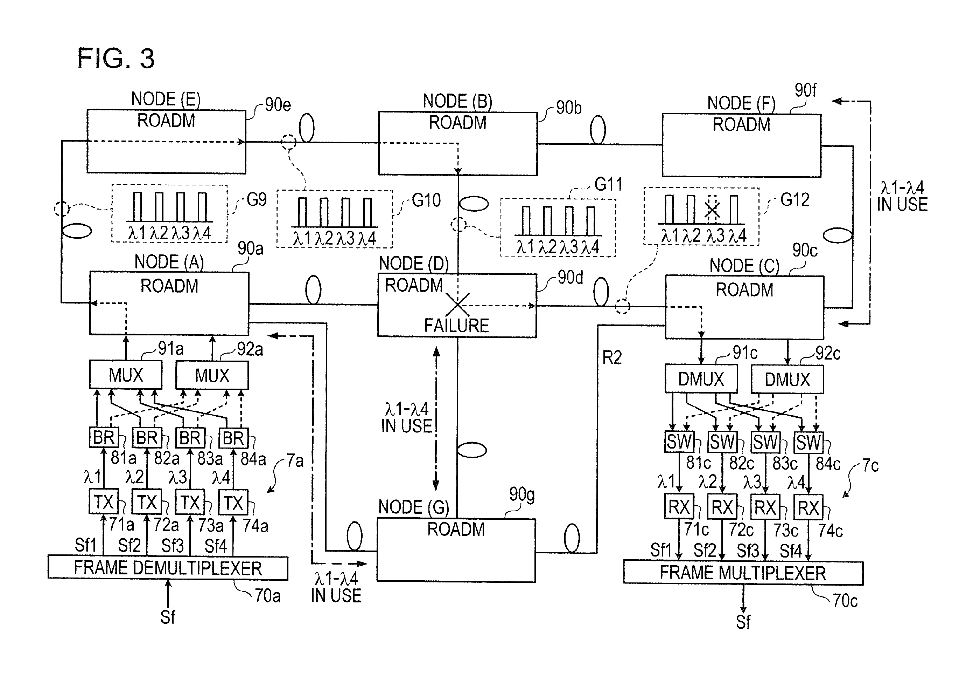

FIG. 3 is a configuration diagram of an optical transmission system according to the third comparison example. In FIG. 3, identical reference numerals designate configuration elements in common with FIG. 1, and descriptions thereof are omitted.

The optical transmission system is a network in which nodes (A) to (G) are connected in a mesh formation through optical fibers. The nodes (A) to (G) each include an optical transmission apparatus similar to the ones in the foregoing comparison examples.

The optical transmission apparatus of the node (A) transmits a multicarrier signal to the optical transmission apparatus of the node (C) (see graphs G9 to G11) following a transmission route that goes through the optical transmission apparatuses of the node (E), the node (B), and the node (D) in that order. Here, suppose that, as illustrated in a graph G12, a failure occurs at the optical transmission apparatus of the node (D), and the subcarrier signal of wavelength λ3 is failed in between the node (D) and the node (C).

In this case, candidates for the backup transmission route between the node (A) and the node (C) include: a route going through the node (E), the node (B) and the node (F); a route going through the node (D) and the node (G); and a route going through only the node (G). However, as described above, in the mesh type network, bands are retained for respective patterns of the backup transmission route. This lowers the band utilization efficiency and reduces flexibility in setting optical signal paths, thereby resulting lower transmission capacity. Accordingly, in the mesh type network, there is an issue that it is difficult to use the foregoing OUPSR system and to secure the backup transmission route for a subcarrier signal having the same wavelength as that of a failed subcarrier signal.

Thus, for example, there may be a case where other optical signals of the wavelengths λ1 to λ4 are being transmitted through route segments (see dashed-dotted lines) between the node (F) and the node (C), between the node (D) and the node (G), and between the node (A) and the node (G), and these routes are being in use. In this case, none of the foregoing routes may be used as the backup transmission route. Thus, the optical transmission apparatus of the node (C) at the receiving side is unable to receive the frame signal Sf, and the failure is not recovered.

### Embodiment

In view of the above, an optical transmission apparatus according to the embodiment demultiplexes a frame signal Sf, modulates to a plurality of subcarrier signals of different wavelengths λ1 to λ4, and transmits resulting signals. Further, the optical transmission apparatus according to the embodiment switches the subcarrier signal at which a failure is detected to a subcarrier signal of a backup wavelength that is different from the wavelengths λ1 to λ4. This enables to recover from the subcarrier signal failure.

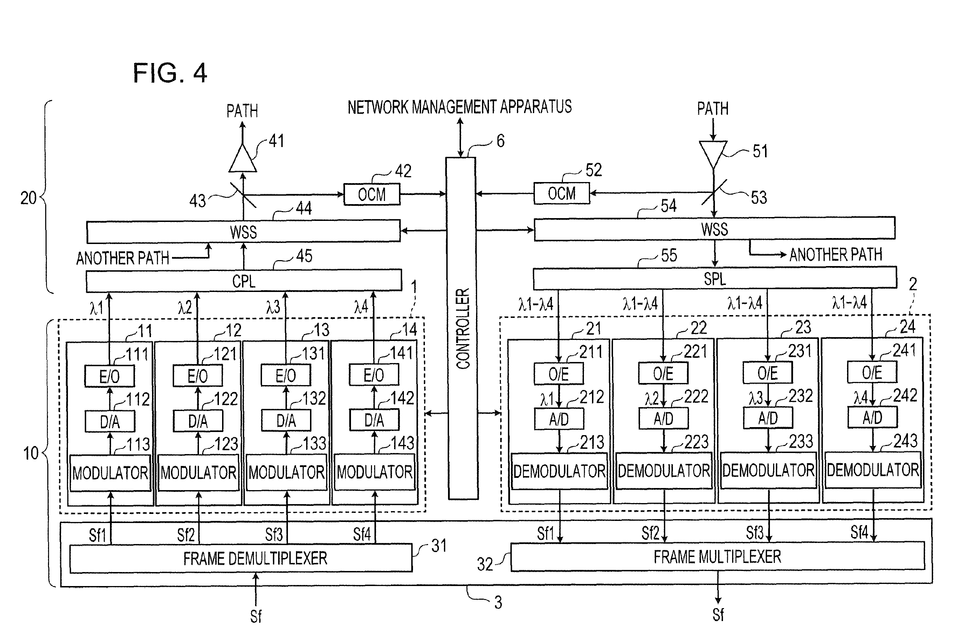

FIG. 4 is a configuration diagram of the optical transmission apparatus according to the embodiment. The optical transmission apparatus includes a ROADM device 20, a transponder device 10, and a controller 6. In FIG. 4, a transmitting side configuration and a receiving side configuration of the ROADM device 20 and the transponder device 10 are illustrated on the left side and the right side of the controller 6 on a plane of paper, respectively. Note that FIG. 4 illustrates only the transmitting side configuration and the receiving side configuration for one of a plurality of paths connected to the optical transmission apparatus, and configurations corresponding to another path are similar to those illustrated in FIG. 4.

The controller 6 includes processor circuitry such as a central processing unit (CPU) or the like, and performs monitoring and controlling of the ROADM device 20 and the transponder device 10. The controller 6 is connected to a network management apparatus that manages a network to which the optical transmission apparatus is connected.

The transponder device 10 includes a frame process unit 3 including a frame demultiplexer 31 and a frame multiplexer 32, a transmission process unit 1, and a reception process unit 2. The ROADM device 20 includes an optical coupler 45, an optical splitter 55, wavelength selective switches (WSS) 44, 54, branching units 43, 53, optical channel monitors (OCM) 42, 52, and optical amplifiers 41, 51.

First, the transmitting side configuration is described. The frame demultiplexer 31 demultiplexes, for example, a 400 Gbps frame signal Sf received from an outside network and generates a plurality of sub-frame signals Sf1 to Sf4. The sub-frame signals Sf1 to Sf4 thus generated are outputted to the transmission process unit 1.

The transmission process unit 1 modulates the frame signal Sf demultiplexed by the frame demultiplexer 31 to four subcarrier signals of different wavelengths λ1 to λ4 and transmits resulting signals. The transmission speed of each subcarrier signal is 100 Gbps assuming the transmission speed of the frame signal Sf is 400 Gbps.

The transmission process unit 1 includes four transmitters 11 to 14, each of which corresponds to one of the four wavelengths λ1 to λ4. The transmitters 11 to 14 receive the corresponding sub-frame signals Sf1 to Sf4, generate subcarrier signals having different wavelengths λ1 to λ4 based on the sub-frame signals Sf1 to Sf4, and transmit the subcarrier signals having different wavelengths λ1 to λ4 thus generated. The transmitters 11 to 14 include electrical-to-optical converters (E/O) 111, 121, 131, 141, digital-to-analog converters (D/A) 112, 122, 132, 142, and modulators 113, 123, 133, 143.

The modulators 113, 123, 133, 143 may each include, for example, processor circuitry such as a digital signal processor (DSP) or the like, and modulate sub-frame signals Sf1, Sf2, Sf3, Sf4, respectively. As the modulation method, DP-QPSK may be used, for example. However, the modulation method is not limited thereto.

The digital-to-analog converters 112, 122, 132, 142 convert the sub-frame signals Sf1 to Sf4 modulated from digital signals to analog signals. The electrical-to-optical converters 111, 121, 131, 141 convert the sub-frame signals Sf1 to Sf4 that are converted to the analog signals into light beams of wavelengths λ1 to λ4, namely subcarrier signals, by electrical-to-optical conversion.

The electrical-to-optical converters 111, 121, 131, 141 function as light sources for outputting corresponding light beams of the subcarrier signals of wavelengths λ1 to λ4. The electrical-to-optical converters 111, 121, 131, 141 each include a device for adjusting optical phase by use of polarization control, and is capable of varying the wavelengths of output light beam. The controller 6 sets the wavelengths of output light beam in the electrical-to-optical converters 111, 121, 131, 141.

The transmission process unit 1 switches one of the plurality of subcarrier signals at which a failure is detected to a subcarrier signal of a backup wavelength that is different from the wavelengths λ1 to λ4 of the plurality of subcarrier signals. Here, upon detection of a failure at any one of the subcarrier signals, the controller 6 performs a control on the transmission process unit 1 to change the wavelength of the subcarrier signal at which the failure occurs to the backup wavelength.

Of the electrical-to-optical converters 111, 121, 131, 141, the transmission process unit 1 switches the wavelength of the light beam of the electrical-to-optical converter corresponding to the subcarrier signal at which the failure is detected to the backup wavelength. In other words, of the four transmitters 11 to 14, the controller 6 performs a control to switch the transmitting wavelength of the transmitter that transmits the subcarrier signal at which the failure occurs. It is desirable to perform the control of transmitting wavelength switching so as not to affect the subcarrier signals of the other wavelengths. For example, an output light beam of a target wavelength to be switched may be gradually reduced in power until it is completely turned off, and after switching to the backup wavelength, an output light beam may be gradually increased in power. The subcarrier signals of wavelengths λ1 to λ4 generated by the corresponding transmitters 11 to 14 are outputted to the ROADM device 20.

In the ROADM device 20, the respective subcarrier signals of wavelengths λ1 to λ4 are inputted to the optical coupler 45. The optical coupler 45 combines the subcarrier signals of wavelengths λ1 to λ4 and sends to the wavelength selective switch 44. Each input port of the optical coupler 45 is capable of receiving input of a subcarrier signal of an arbitrary wavelength. Thus, the foregoing colorless capability is achieved with the optical coupler 45. Further, the optical coupler 45 also includes the gridless capability for performing the multicarrier transmission.

Although it is not illustrated in the drawing, the optical coupler 45 may receive, in addition to the subcarrier signals of wavelengths λ1 to λ4, input of an optical signal from another transponder device. In the present embodiment, the optical coupler 45 is used as a device for combining the subcarrier signals. Alternatively, a different device may be used for combining.

The wavelength selective switch 44 performs wavelength multiplexing of the subcarrier signals of wavelengths λ1 to λ4, and outputs a resulting signal as a multicarrier signal. Specifically, the wavelength selective switch 44 selects optical signals having predetermined wavelengths from among inputted optical signals based on the setting by the controller 6, performs wavelength multiplexing of optical signals of selected wavelengths, and outputs a resulting signal to the branching unit 43. The wavelength selective switch 44 also receives input of an optical signal from another path in addition to the subcarrier signals of wavelengths λ1 to λ4. Wavelength multiplexing is performed on these received signals.

The branching unit 43 may be, for example, an optical splitter, and splits the multicarrier signal inputted from the wavelength selective switch 44 and sends to the optical amplifier 41 and the optical channel monitor 42. The optical channel monitor 42 may, for example, monitor an optical level of the multicarrier signal at each wavelength. Specifically, the optical channel monitor 42 detects a failure event at one of the subcarrier signals of wavelengths λ1 to λ4 when the optical level becomes less than a predetermined level or an error rate thereof becomes greater than a predetermined rate. Upon detection of a subcarrier signal failure, the optical channel monitor 42 sends a message to the controller 6 to notify of the failure detection.

Further, the optical amplifier 41 amplifies the multicarrier signal and outputs a resulting signal to a corresponding path. The optical amplifier 41 amplifies the multicarrier signal by use of, for example, an erbium-doped fiber.

Next, the receiving side configuration is described. The optical amplifier 51 amplifies a multicarrier signal inputted from a corresponding path and outputs a resulting signal to the branching unit 53. The branching unit 53 may be, for example, an optical splitter, and splits the multicarrier signal and sends to the wavelength selective switch 54 and the optical channel monitor 52.

As is the case with the foregoing optical channel monitor 42, the optical channel monitor 52 monitors subcarrier signals included in the multicarrier signal and detects a failure event at the subcarrier signal. When the failure is detected, the optical channel monitor 52 sends a message to the controller 6 to notify of the failure detection.

The wavelength selective switch 54 outputs the multicarrier signal to the optical splitter 55. When the multicarrier signal is relayed and re-transmitted to another path, the wavelength selective switch 54 outputs the multicarrier signal to the wavelength selective switch 44 at the transmitting side of the present path. The wavelength selective switch 54 selects wavelengths set by the controller 6, performs wavelength multiplexing of light beams having selected wavelengths, and outputs a resulting signal.

The optical splitter 55 splits the inputted multicarrier signal and sends to the reception process unit 2. The reception process unit 2 receives and demodulates a plurality of subcarrier signals transmitted by the transmission process unit 1.

The reception process unit 2 includes receivers 21 to 24, each of which corresponds to one of the wavelengths λ1 to λ4. The receivers 21 to 24 include optical-to-electrical converters (O/E) 211, 221, 231, 241, analog-to-digital converters (A/D) 212, 222, 231, 241, and demodulators 213, 223, 233, 243.

The optical-to-electrical converters 211, 221, 231, 241 convert the subcarrier signals of wavelengths λ1 to λ4, which are included in the multicarrier signal inputted from the optical splitter 55, to electrical signals, and output resulting signals to the analog-to-digital converters 212, 222, 232, 242, respectively. The optical-to-electrical converters 211, 221, 231, 241 each include a device for adjusting optical phase by use of polarization control, and are each capable of varying the wavelength of input light beam. The controller 6 sets the wavelengths of input light beams of the optical-to-electrical converters 211, 221, 231, 241.

Of the receiving wavelengths, the reception process unit 2 switches the wavelength of the subcarrier signal at which the failure is detected to the backup wavelength. In other words, of the four receivers 21 to 24, the controller 6 performs a control to switch the receiving wavelength of the receiver that receives the subcarrier signal at which the failure occurs.

The analog-to-digital converters 212, 222, 232, 242 converts analog signals inputted from the optical-to-electrical converters 211, 221, 231, 241 to digital signals, respectively. The demodulators 213, 223, 233, 243 may each be, for example, processor circuitry such as a DSP or the like. The demodulators 213, 223, 233, 243 demodulate the digital signals inputted from the analog-to-digital converters 212, 222, 232, 242, respectively, and generate sub-frame signals Sf1 to Sf4. The demodulation method matches the modulation method adopted in the modulators 113, 123, 133, 143 at the transmitting side. The sub-frame signals Sf1 to Sf4 thus generated are outputted to the frame multiplexer 32.

The frame multiplexer 32 performs wavelength multiplexing of the plurality of subcarrier signals demodulated by the reception process unit 2, namely the sub-frame signals Sf1 to Sf4, and rebuilds the frame signal Sf. The frame signal Sf thus rebuilt is transmitted to an external network.

As described above, the transmission process unit 1 switches the subcarrier signal that is one of the plurality of subcarrier signals and at which the failure is detected to the subcarrier signal of the backup wavelength that is different from the wavelengths λ1 to λ4 of the plurality of subcarrier signals. Further, of the receiving wavelengths λ1 to λ4, the reception process unit 2 switches the wavelength at which the failure is detected to the backup wavelength.

Accordingly, the same backup wavelength is used in between the optical transmission apparatus at the transmitting side and the optical transmission apparatus at the receiving side. This enables to transmit the subcarrier signal of the backup wavelength instead of the subcarrier signal that is one of the subcarrier signals of the wavelengths λ1 to λ4 and has the wavelength at which the failure is detected. Accordingly, the subcarrier signal failure is recovered without switching the transmission route.

Four 100 Gbps DP-QPSK modulated signals are used as the subcarrier signals of the present embodiment. However, the subcarrier signals of the present embodiment are not limited thereto. The subcarrier signals may be, for example, two 200 Gbps DP-16QAM signals, or eight 50 Gbps DP-BPSK signals. The number of the transmitters 11 to 14 and the number of the receivers 21 to 24 are each two for the former case and eight for the latter case.

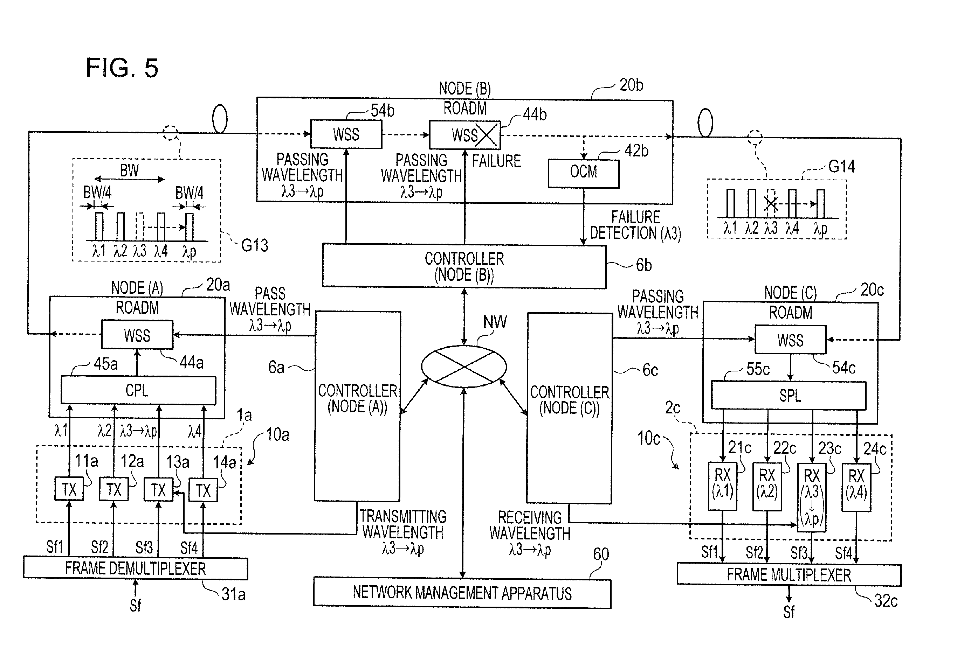

Next, there is described an exemplary optical transmission system in which an optical transmission apparatus according to the present embodiment is adopted. FIG. 5 is a configuration diagram of the optical transmission system according to an embodiment. The optical transmission system is a network in which nodes (A) to (C) are connected in series. The form of network is not limited thereto, and may also be of the ring type or the mesh type. With regard to reference characters in FIG. 5, numeral part of each reference character corresponds to the reference numeral of configuration element illustrated in FIG. 4, and an alphabet 'a', 'b', or 'c' attached at the end of the reference character corresponds to the node (A), (B), or (C).

The nodes (A) to (C) each include an optical transmission apparatus. The optical transmission apparatus of the node (A) transmits a multicarrier signal to the optical transmission apparatus of the node (C) via the optical transmission apparatus of the node (B). In FIG. 5, the configuration of the optical transmission apparatus is partially illustrated. With regard to the optical transmission apparatus of the node (A), the configuration at the transmitting side is illustrated, and with regard to the optical transmission apparatus of the node (C), the configuration at the receiving side is illustrated. Further, with regard to the optical transmission apparatus of the node (B), only a wavelength selective switch 54b at the receiving side, a wavelength selective switch 44b at the transmitting side, and an optical channel monitor 42b are illustrated.

Controllers 6a to 6c of the optical transmission apparatuses of the nodes (A) to (C) are connected to a network management apparatus 60 via a management network NW such as a local area network (LAN) or the like. This allows the controllers 6a to 6c to communicate via the network management apparatus 60.

In a transponder device 10a at the node (A), a frame demultiplexer 31a demultiplexes a frame signal Sf, and transmitters via to 14a transmit corresponding subcarrier signals of wavelengths λ1 to λ4. Further, in a ROADM device 20a, an optical coupler 45a combines the subcarrier signals of wavelengths λ1 to λ4, and a wavelength selective switch 44a performs wavelength multiplexing to generate a multicarrier signal and outputs to a path to a node (B) side.

The multicarrier signal has a bandwidth of BW, and each subcarrier signal has a bandwidth of BW/4. Here, the bandwidth BW is a free band region determined in consideration of the spectrum and the modulation method used in the subcarrier signal and effects of crosstalk between adjacent wavelengths. Thus, the wavelength selective switches 44a, 54b, 44b, and 54c of the ROADM devices 20a to 20c each include the gridless capability.

Further, the bandwidth of the backup wavelength λp is BW/4 or more. Upon detection of a failure event, the controller 6a selects a band for the backup wavelength λp from unused bands in the network. Of course, the band for the wavelength λp may be retained in advance in the network.

The multicarrier signal received at the ROADM device 20b of the node (B) is transmitted to a path to a node (C) side through the wavelength selective switch 54b at the receiving side and the wavelength selective switch 44b at the transmitting side.

In the ROADM device 20c at the node (C), the wavelength selective switch 54c separates the multicarrier signal from a wavelength-multiplexed optical signal, and the optical splitter 55c sends resulting signals to corresponding receivers 21c to 24c. In the transponder device 10c, the receivers 21c to 24c each demodulate the subcarrier signals of wavelengths λ1 to λ4, and output corresponding sub-frame signals Sf1 to Sf4. The frame multiplexer 32c performs wavelength multiplexing of the sub-frame signals Sf1 to Sf4 and rebuilds the frame signal Sf. Note that the wavelengths and the sequence of transmission lanes for the subcarrier signals of wavelengths λ1 to λ4 are identical in the transponder device 10c and the transponder device 10a of the node (A).

Suppose that, in the foregoing optical transmission system, a failure occurs at the wavelength selective switch 44b at the transmitting side of the node (B), and the subcarrier signal of the wavelength λ3 is failed as illustrated in a graph G14. In such a case, for example, since the wavelength selective switch 44b performs a minute wavelength control with the gridless capability, there may be a case where a light beam of specific wavelength λ3 is not allowed to pass through due to a partial failure. Further, due to this failure, the frame multiplexer 32c is unable to properly receive the sub-frame signal Sf3. Thus, an alarm (LOF) is issued.

The failure of the subcarrier signal of the wavelength λ3 is detected by the optical channel monitor 42b that monitors light beams outputted from the wavelength selective switch 44b. The optical channel monitor 42b sends a message to the controller 6b to notify of a failure of the subcarrier signal of the wavelength λ3. The controller 6b sends a failure message to the controllers 6a and 6c of the node (A) and (C) through the network management apparatus 60.

At the node (A), the controller 6a selects the backup wavelength λp from among unused wavelengths in the network to which the present optical transmission apparatus is connected. As described above, selecting the backup wavelength λp from among unused wavelengths in the network enables to improve the band utilization efficiency compared to the case where the band for the backup wavelength λp is retained in advance.

The controller 6a sends an instruction to the transmitter 13a corresponding to the wavelength λ3, at which the failure occurs, to switch the transmitting wavelength of the subcarrier signal from the wavelength λ3 to the backup wavelength λp. This allows the transmitter 13a to transmit the subcarrier signal of the wavelength λp in place of the subcarrier signal of the wavelength λ3.

Further, the controller 6a sends an instruction to the wavelength selective switch 44a at the transmitting side to switch its passing wavelength of optical signal from the wavelength λ3 to the backup wavelength λp. This allows the subcarrier signal of the backup wavelength λp to pass the wavelength selective switch 44a and to be transmitted to a path to the node (B) side, in place of the subcarrier signal of the wavelength λ3, as illustrated in a graph G13.

At the node (B), the controller 6b sends an instruction to the wavelength selective switch 54b at the receiving side and the wavelength selective switch 44b at the transmitting side to switch its passing wavelength of optical signal from the wavelength λ3 to the backup wavelength λp. This allows the wavelength selective switches 54b and 44b to switch their passing band wavelength from the wavelength λ3 to the backup wavelength λp.

Accordingly, in the ROADM device 30b of the node (B), the subcarrier signal of the backup wavelength λp passes through the wavelength selective switches 54b and 44b and is transmitted to a path to the node (C) side in place of the subcarrier signal of the wavelength λ3, as illustrated in a graph G14. When one or more relay nodes are present on the transmission route in addition to the node (B), the subcarrier signal of the backup wavelength λp may be relayed by similarly controlling the ROADM device of each relay node.

At the node (C), the controller 6c sets the wavelength selective switch 54c at the receiving side so as to switch its passing wavelength of optical signal from the wavelength λ3 to the backup wavelength λp. This allows the subcarrier signal of the backup wavelength λp to be inputted to the receivers 23c through the optical splitter 55c in place of the subcarrier signal of the wavelength λ3.

Further, the controller 6c sends an instruction to the receiver 23c to switch its receiving wavelength from the wavelength λ3 to the backup wavelength λp. This allows the receiver 23c to receive the subcarrier signal of the backup wavelength λp in place of the subcarrier signal of the wavelength λ3, and the sub-frame signal Sf3 is inputted again to the frame multiplexer 32c.

In this case, the same backup wavelength λp is used for the transmitting wavelength of the transmitter 13a and the receiving wavelength of the receiver 23c. Thus, the wavelengths and the sequence of transmission lanes are identical at the transmitting side and the receiving side. Accordingly, the subcarrier signal alarm (LOF) is called off, and the subcarrier signal failure is recovered.

In the present embodiment, the ROADM device 20a includes the colorless capability achieved with the optical coupler 45a, and the ROADM device 20c includes the colorless capability achieved with the optical coupler 45c. Accordingly, the ROADM devices 20a and 20c are capable of transmitting the subcarrier signal of the backup wavelength λp without changing optical fiber connections to the transponder devices 10a and 10c.

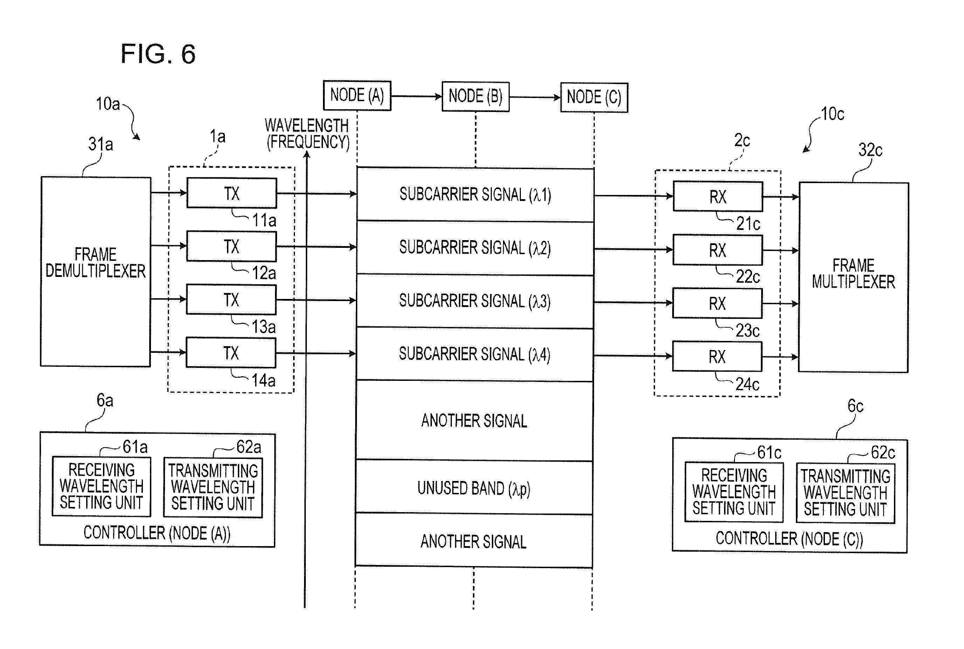

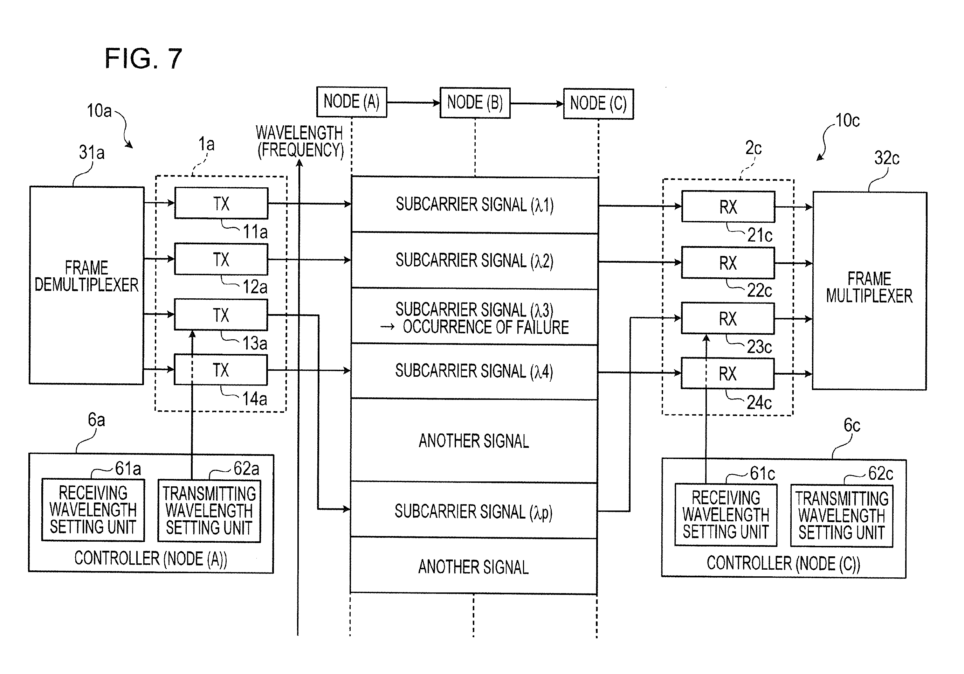

Next, the foregoing recovery process from a subcarrier signal failure is described with reference to FIG. 6 and FIG. 7. FIG. 6 illustrates a state of transmission with the subcarrier signals before a failure occurs. FIG. 6 illustrates the controller 6a and a transmitting side configuration of the transponder device 10a at the node (A) and the controller 6c and a receiving side configuration of the transponder device 10c at the node (C). FIG. 6 schematically illustrates signals being transmitted between the node (A) and the node (C) at the center of page with a vertical axis representing the wavelength (frequency).

The transmitters 11a to 14a transmit the corresponding subcarrier signals of wavelengths λ1 to λ4, and the receivers 21c to 24c receive the corresponding subcarrier signals of wavelengths λ1 to λ4. Further, the controllers 6a and 6c include transmitting wavelength setting units 62a and 62c for setting the transmitting wavelength (transmitting frequency) of the transmission process unit 1 (1a) and receiving wavelength setting units 61a and 61c for setting the receiving wavelength (receiving frequency) of the reception process unit 2 (2c), respectively.

FIG. 7 illustrates a state of transmission with the subcarrier signals after a failure occurs. When a failure occurs at the subcarrier signal of wavelength λ3, the controller 6a of the node (A) selects a band for the backup wavelength λp from unused bands in the network. Further, the transmitting wavelength setting unit 62a sets the transmitting wavelength of the transmitter 13a to the backup wavelength λp, and the receiving wavelength setting unit 61c sets the receiving wavelength of the receiver 23c to the backup wavelength λp.

This allows the subcarrier signal of the backup wavelength λp to be transmitted between the optical transmission apparatuses of the node (A) and the node (C). Alternatively, the band for the backup wavelength λp may not be used for only one multicarrier signal, but may be shared with another multicarrier signal. This minimizes the bands to be used for failure recovery and increases the band utilization efficiency in the network.

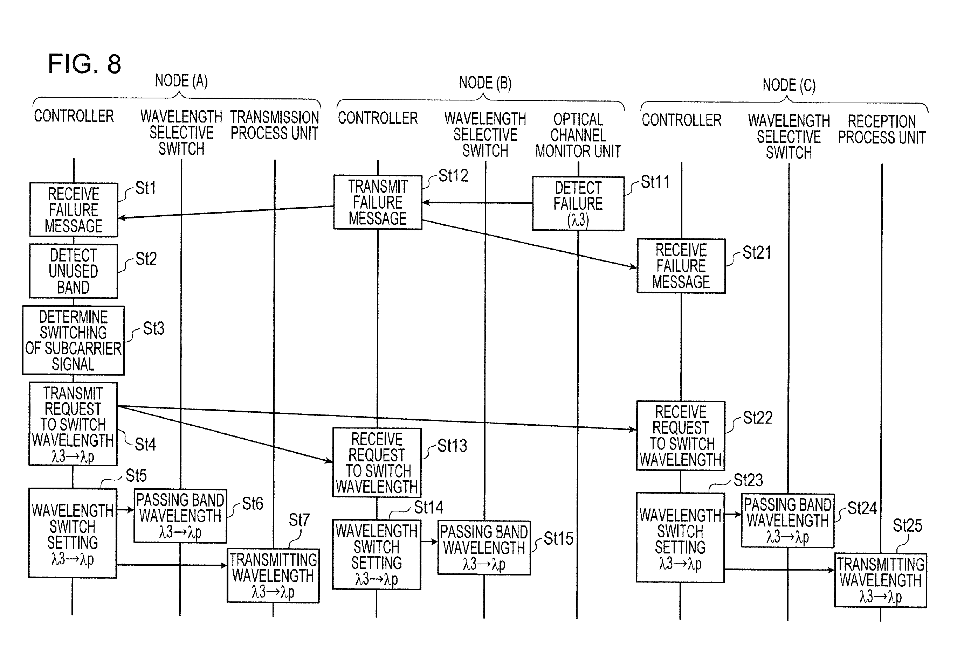

FIG. 8 is a ladder chart of a control process for switching the wavelength of subcarrier signal. Of the configuration illustrated in FIG. 5, FIG. 8 illustrates processes at the controllers 6a to 6c, the wavelength selective switches 44a, 44b, 54b, 54c, the transmission process unit 1a, the reception process unit 2c, and the optical channel monitor 42b.

At the node (B), when the optical channel monitor 42b detects a failure of the subcarrier signal of wavelength λ3, the optical channel monitor 42b sends a message to the controller 6b to notify of a detection of failure (operation St11). Next, the controller 6b sends a failure message to the controllers 6a and 6c of the node (A) and (C) through the network management apparatus 60 (operation St12). The controllers 6a and 6c each receive the failure message (operations St1, St21). Note that a device for transmitting the failure message is not limited to the network management apparatus 60. Alternatively, one wavelength of a wavelength-multiplexed optical signal to be transmitted by the optical transmission apparatuses may be allocated for a control channel, and this control channel may be used to transmit the failure message. Further, the failure message may also be transmitted via a dedicated wavelength optical supervisory channel (OSC) for monitoring and controlling, which is allocated outside the bands of multiplexed optical signal, or the like.

Next, the controller 6a of the node (A) detects the unused bands in the network by communicating with the network management apparatus 60 (operation St2). Upon detection of a band for the backup wavelength λp, the controller 6a determines switching of the subcarrier signal (operation St3). The band for the backup wavelength λp is not limited to be a band selected from the unused bands, and may also be a band retained in advance.

Next, the controller 6a sends an instruction to the respective controllers 6b and 6c of the other node (B) and node (C) to switch the wavelength of the subcarrier signal at which a failure occurs from λ3 to λp (operation St4). The controllers 6b and 6c each receive the instruction (operations St13, St22). A device for transmitting the instruction is not limited to the network management apparatus 60. Alternatively, the foregoing control channel may be used.

Next, the controller 6a performs wavelength switch setting on the wavelength selective switch 44a and the transmission process unit 1a (operation St5). This allows the wavelength selective switch 44a to switch its passing band wavelength from the wavelength λ3 to the backup wavelength λp (operation St6). Further, the transmission process unit 1a switches the transmitting wavelength of the transmitter 13a from the wavelength λ3 to the backup wavelength λp (operation St7).

Further, the controller 6b of the node (B) performs the wavelength switch setting on the wavelength selective switches 44b and 54b (operation St14). This allows the wavelength selective switches 44b and 54b to switch their passing band wavelength from the wavelength λ3 to the backup wavelength λp (operation St15).

Further, the controller 6c of the node (C) performs the wavelength switch setting on the wavelength selective switch 54c and the reception process unit 2c (operation St23). This allows the wavelength selective switches 54c to switch its passing band wavelength from the wavelength λ3 to the backup wavelength λp (operation St24). Further, the reception process unit 2c switches the receiving wavelength of the receiver 23c from the wavelength λ3 to the backup wavelength λp (operation St25). In this way, the control process for switching the wavelength of subcarrier signal is performed.

As described above, the present embodiment enables to recover from a failure by changing the subcarrier signal at which the failure occurs to the subcarrier signal of the backup wavelength that is different from that of the failed subcarrier signal without switching the transmission route. Accordingly, unlike the foregoing first comparison example and the second comparison example, in the present embodiment, a failure may be recovered without retaining bands for all the subcarrier signals in the backup transmission route. Thus, the band utilization efficiency of the network is improved. Further, the present embodiment does not retain the backup transmission route. Thus, the present embodiment is capable of recovering from a subcarrier signal failure even when connecting to a mesh type network similar to the foregoing third comparison example.

In the foregoing embodiment, the ROADM device 20 includes the colorless capability and the gridless capability. The ROADM device 20 may further include the directionless capability and the contentionless capability. In other words, the ROADM device 20 may include the foregoing CDC capability.

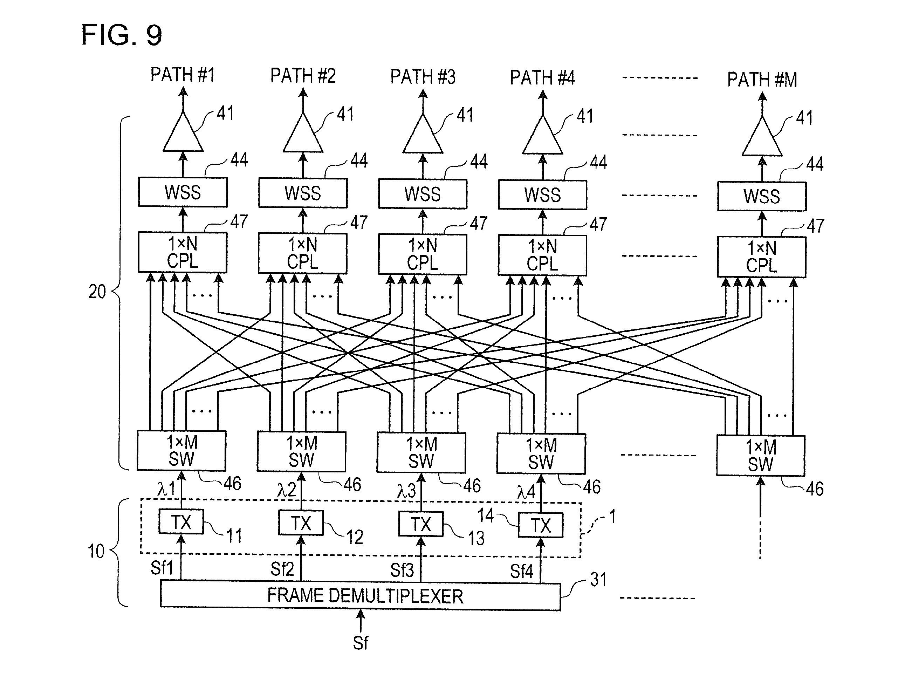

FIG. 9 is a diagram illustrating a transmitting side configuration of the optical transmission apparatus including the CDC capability. In FIG. 9, identical reference numerals designate constituting elements in common with FIG. 4, and descriptions thereof are omitted.

A transponder device 10 includes a frame demultiplexer 31 and a transmission process unit 1. A ROADM device 20 includes M optical couplers 47, N optical switches 46, M wavelength selective switches 44, and M optical amplifiers 41. In FIG. 9, illustrations of an optical channel monitor 42 and a branching unit 43 are omitted.

The optical coupler 47 is a 1×N star coupler and connected to the respective N optical switches 46. The optical switch 46 is a 1×M port switch and connected to the respective M optical couplers 47.

Transmitters 11 to 14 of the transmission process unit 1 output subcarrier signals of wavelengths λ1 to λ4 to different optical switches 46. The optical switch 46 selects destinations of an inputted subcarrier signal from among the M optical couplers 47 in accordance with the setting of a controller 6. Each optical coupler 47 is connected to the wavelength selective switch 44 and the optical amplifier 41 corresponding to each one of the paths #1 to #M. Accordingly, the subcarrier signals having wavelengths λ1 to λ4 are transmitted to any path.

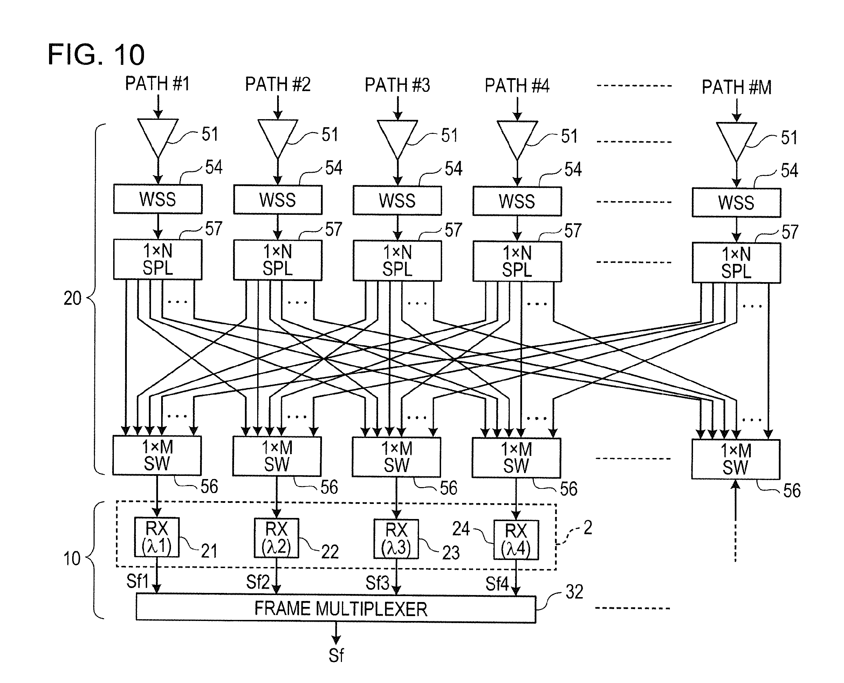

FIG. 10 is a diagram illustrating a transmitting side configuration of the optical transmission apparatus including the CDC capability. In FIG. 10, identical reference numerals designate constituting elements in common with FIG. 4, and descriptions thereof are omitted.

A transponder device 10 includes a frame multiplexer 32 and a reception process unit 2. A ROADM device 20 includes M optical splitters 57, N optical switches 56, M wavelength selective switches 54, and M optical amplifiers 51. In FIG. 10, illustrations of an optical channel monitor 52 and a branching unit 53 are omitted.

The optical splitter 57 is a 1×N star coupler and connected to the respective N optical switches 56. The optical switch 56 is a 1×M port switch and connected to the respective M optical splitters 57.

The optical splitter 57 sends a multiplexed optical signal (multicarrier signal) inputted from the wavelength selective switch 54 and the optical amplifier 51 corresponding to one of the paths #1 to #M to the respective optical switches 56. The optical switch 56 selects an input source of the multiplexed optical signal from among the M optical splitters 57 in accordance with the setting of the controller 6. An optical signal outputted from the optical switch 56 is inputted to corresponding one of receivers 21 to 24 of the reception process unit 2.

As described above, the optical transmission apparatus illustrated in FIG. 9 and FIG. 10 includes the directionless capability, for this optical transmission apparatus is capable of transmitting an optical signal to any path and receiving an optical signal from any path by use of the optical switches 46 and 56. The optical transmission apparatus further includes the contentionless capability, for this optical transmission apparatus is capable of transmitting optical signals of the same wavelength to different paths by use of the optical switches 46 and 56.

For example, when this optical transmission apparatus is connected to a mesh type network, the optical transmission apparatus is capable of recovering from a subcarrier signal failure by use of the foregoing CDC capability without changing fiber connection inside the apparatus even when this optical transmission apparatus is connected to a plurality of other optical transmission apparatuses through a plurality of paths.

Further, in the foregoing embodiment, the optical transmission apparatus at the transmitting side switches the transmitting wavelength in one of the transmitters 11 to 14 to the backup wavelength λp. However, the embodiment is not limited thereto. For example, in addition to the transmitters 11 to 14, a backup transmitter may be included for transmitting the subcarrier signal of the backup wavelength λp.

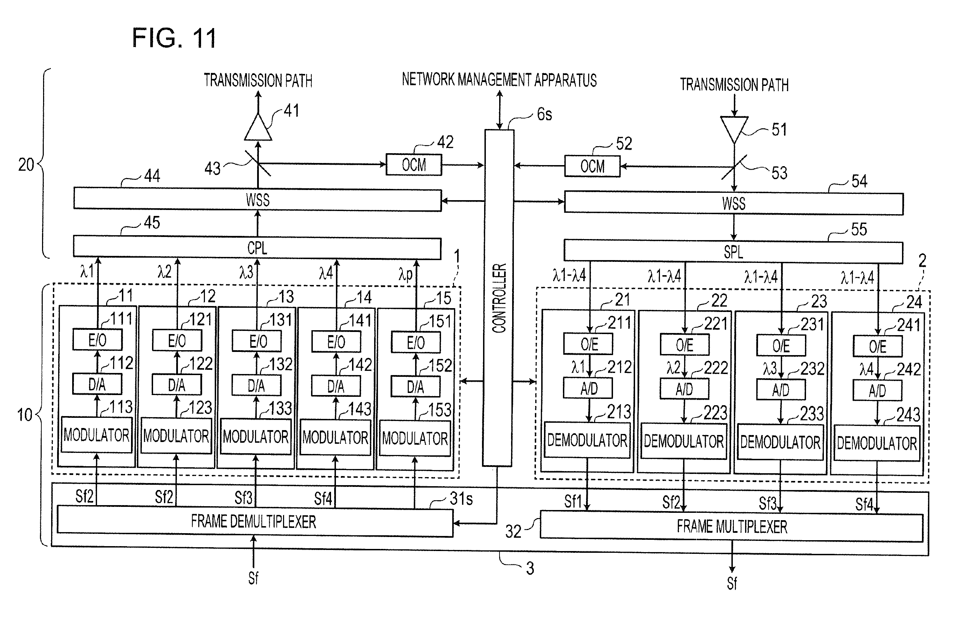

FIG. 11 is a configuration diagram of an optical transmission apparatus according to an embodiment for such a case. In FIG. 11, identical reference numerals designate constituting elements in common with FIG. 4, and descriptions thereof are omitted.

An optical transmission apparatus includes a ROADM device 20, a transponder device 10, and a controller 6s. The transponder device 10 includes a frame process unit 3 including a frame demultiplexer 31s and a frame multiplexer 32, a transmission process unit 1, and a reception process unit 2. The ROADM device 20 includes an optical coupler 45, an optical splitter 55, wavelength selective switches 44, 54, branching filters 43, 53, optical channel monitors 42, 52, and optical amplifiers 41, 51.

The transmission process unit 1 includes transmitters 11 to 14 and a backup transmitter 15. The backup transmitter 15 includes, as is the case with other transmitters 11 to 14, an electrical-to-optical converter 151, a digital-to-analog converter 152, and a modulator 153.

The electrical-to-optical converter 151 of the backup transmitter 15 functions as a light source for outputting a light beam having the backup wavelength λp. The backup transmitter 15 generates a subcarrier signal of the backup wavelength λp that is different from those of the transmitters 11 to 14, and outputs to the optical coupler 45. The controller 6s sets the backup wavelength λp.

Upon reception of a failure message (see, FIG. 8, the operation St1), the controller 6s sends an instruction to the transmission process unit 1 to turn off one of the transmitters 11 to 14 that corresponds to the wavelength of the subcarrier signal at which a failure occurs. Of the transmitters 11 to 14, the transmission process unit 1 stops an output operation of the transmitter corresponding to the wavelength of the subcarrier signal at which a failure occurs. For example, when a failure occurs at the subcarrier signal of wavelength λ3, the transmission process unit 1 stops the output operation of the transmitter 13.

Further, the controller 6s sends a message to the frame demultiplexer 31s to notify of the wavelength of the subcarrier signal at which the failure occurs. The frame demultiplexer 31s demultiplexes a frame signal Sf, generates sub-frame signals Sf1 to Sf4, and outputs to the transmitters 11 to 14. When the frame demultiplexer 31s receives the message indicative of the wavelength of the subcarrier signal at which a failure occurs from the controller 6s, the frame demultiplexer 31s stops outputting the sub-frame signal to the transmitter that is one of the transmitters 11 to 14 and corresponds to the wavelength indicated by the message, and outputs that sub-frame signal to the backup transmitter 15 instead. For example, when a failure occurs at the subcarrier signal of wavelength λ3, the frame demultiplexer 31s stops outputting the sub-frame signal Sf3 to the transmitter 13, and outputs the sub-frame Sf3 to the backup transmitter 15.

As described above, the transmission process unit 1 includes the transmitters 11 to 14 that output corresponding light beams of wavelengths λ1 to λ4 of the subcarrier signals, and the backup transmitter 15 that outputs a light beam of wavelength λp. Of the transmitters 11 to 14, the transmission process unit 1 stops an output operation of the transmitter corresponding to the subcarrier signal at which the failure is detected, and starts an output operation of the backup transmitter 15.

In this way, as is the case with the foregoing embodiment, the transmission process unit 1 recovers from a failure by switching from the subcarrier signal at which the failure occurs to the subcarrier signal of the backup wavelength λp. Here, the number of the backup transmitter 15 may be at least one, for the subcarrier signal of the backup wavelength λp is transmitted through the same transmission route as that of the other subcarrier signals of wavelengths λ1 to λ4. On the other hand, in the case where a failure is recovered by use of the backup transmission route without switching wavelength, it is difficult to anticipate which one of the subcarrier signals of wavelengths λ1 to λ4 may fail, and thus desirable to have backup transmitters for all the wavelengths λ1 to λ4. In other words, it is desirable to have the same number of the backup transmitters as the total number of the subcarrier signals. This increases a cost of apparatus.

As described above, the optical transmission apparatus according to an embodiment include the frame demultiplexer 31 or 31s and the transmission process unit 1. The frame demultiplexer 31 and 31s each demultiplex a frame signal Sf. The transmission process unit 1 modulates the frame signal Sf demultiplexed by the frame demultiplexer 31 or 31s into a plurality of subcarrier signals of different wavelengths λ1 to λ4 and transmits resulting signals. The transmission process unit 1 switches the subcarrier signal that is one of the plurality of subcarrier signals and at which a failure is detected to the subcarrier signal of the backup wavelength λp that is different from the wavelengths λ1 to λ4 of the plurality of subcarrier signals.

The optical transmission apparatus according to an embodiment transmits a frame signal Sf in form of a plurality of subcarrier signals. When a failure occurs at one of the subcarrier signals, the optical transmission apparatus according to an embodiment transmits the frame signal Sf after changing the one of the subcarrier signals to the subcarrier signal of the backup wavelength λp. Thus, the optical transmission apparatus according to an embodiment is capable of recovering from a failure without switching the transmission route of the subcarrier signals.

Accordingly, unlike the foregoing first comparison example and the second comparison example, the optical transmission apparatus according to an embodiment recovers from a failure without retaining bands for all the subcarrier signals in the backup transmission route. Thus, the band utilization efficiency of the network is improved. Further, the optical transmission apparatus according to an embodiment retains no backup transmission route. Thus, the optical transmission apparatus according to an embodiment is capable of recovering from a subcarrier signal failure even when connecting to a mesh type network similar to the foregoing third comparison example.

Further, the optical transmission system according to an embodiment includes a transmitting side optical transmission apparatus and a receiving side optical transmission apparatus. The transmitting side optical transmission apparatus includes the frame demultiplexer 31 or 31s that demultiplexes a frame signal Sf and the transmission process unit 1 that modulates the frame signal Sf demultiplexed by the frame demultiplexer 31 or 31s into a plurality of subcarrier signals having different wavelengths λ1 to λ4 and transmits resulting signals. The receiving side optical transmission apparatus includes the reception process unit 2 that receives and demodulates the plurality of subcarrier signals transmitted by the transmission process unit 1, and the frame multiplexer 32 that performs wavelength-multiplexing of the plurality of subcarrier signals demodulated by the reception process unit 2 and rebuilds the frame signal Sf.

Of the plurality of subcarrier signals, the transmission process unit 1 switches the subcarrier signal at which a failure is detected to the subcarrier signal of the backup wavelength λp that is different from the wavelengths λ1 to λ4 of the plurality of subcarrier signals. Of the receiving wavelengths λ1 to λ4, the reception process unit 2 switches the wavelength at which the failure is detected to the backup wavelength λp.

The optical transmission system according to an embodiment include the same constituting elements as those of the optical transmission apparatus according to an embodiment, and thus operates similarly and produces similar effects as the ones described above.

Further, an optical transmission method according to an embodiment is a method that demultiplexes a frame signal Sf, modulates to a plurality of subcarrier signals of different wavelengths λ1 to λ4, and transmits resulting signals. Further, in the optical transmission method according to an embodiment, the subcarrier signal at which a failure is detected is switched to a subcarrier signal of a backup wavelength λp that is different from the wavelengths λ1 to λ4.

The optical transmission method according to an embodiment includes the same constituting elements as those of the optical transmission apparatus according to an embodiment, and thus operates similarly and produces similar effects as the ones described above.

Contents of the present disclosure are descried in detail with reference to preferable embodiments. However, it is obvious to a person skilled in the art that various different embodiments may be adopted based on the basic technical principles and teachings of the present disclosure.

## Claims

1. An optical transmission apparatus comprising:
a frame demultiplexer configured to demultiplex a frame signal; and
a transmission process unit configured to modulate the frame signal demultiplexed by the frame demultiplexer to a plurality of subcarrier signals of different wavelengths and transmit the plurality of subcarrier signals,
wherein the transmission process unit switches the subcarrier signal that is one of the plurality of subcarrier signals and at which a failure is detected to a subcarrier signal of a backup wavelength different from wavelengths of the plurality of subcarrier signals.

2. The optical transmission apparatus according to claim 1,
wherein the transmission process unit includes a plurality of light sources that output light beams having the wavelengths of the plurality of subcarrier signals, and switches the wavelength of the light beam outputted from one of the plurality of light sources to the backup wavelength, the one of the plurality of light sources being the light source of the subcarrier signal at which the failure is detected.

3. The optical transmission apparatus according to claim 1,
wherein the transmission process unit includes a plurality of light sources that output light beams having the wavelengths of the plurality of subcarrier signals and a backup light source that outputs a light beam having the backup wavelength, stops an output operation of the light source of the subcarrier signal at which the failure is detected, and starts an output operation of the backup light source.

4. The optical transmission apparatus according to any one of claims 1 to 3,
wherein the backup wavelength is selected from among unused wavelengths in a network to which this optical transmission apparatus is connected.

5. An optical transmission system comprising:
a transmitting side optical transmission apparatus configured to include a frame demultiplexer that demultiplexes a frame signal, and a transmission process unit that modulates the frame signal demultiplexed by the frame demultiplexer to a plurality of subcarrier signals of different wavelengths and transmits the plurality of subcarrier signals; and
a receiving side optical transmission apparatus configured to include a reception process unit that receives and demodulates the plurality of subcarrier signals transmitted by the transmission process unit, and a frame multiplexer that rebuilds the frame signal from the plurality of subcarrier signals demodulated by the reception process unit,
wherein the transmission process unit switches the subcarrier signal that is one of the plurality of subcarrier signals and at which a failure is detected to a subcarrier signal of a backup wavelength, the backup wavelength being different from wavelengths of the plurality of subcarrier signals, and
wherein the reception process unit switches one of receiving wavelengths to the backup wavelength, the one of receiving wavelengths being the wavelength of the subcarrier signal at which the failure is detected.

6. The optical transmission system according to claim 5,
wherein the transmission process unit includes a plurality of light sources that output light beams having the wavelengths of the plurality of subcarrier signals, and switches the wavelength of the light beam outputted from one of the plurality of light sources to the backup wavelength, the one of the plurality of light sources being the light source of the subcarrier signal at which the failure is detected.

7. The optical transmission system according to claim 5,
wherein the transmission process unit includes a plurality of light sources that output light beams having the wavelengths of the plurality of subcarrier signals and a backup light source that outputs a light beam having the backup wavelength, stops an output operation of the light source of the subcarrier signal at which the failure is detected, and starts an output operation of the backup light source.

8. The optical transmission system according to any one of claims 5 to 7,
wherein the backup wavelength is selected from among unused wavelengths in a network to which the transmitting side optical transmission apparatus and the receiving side optical transmission apparatus are connected.

9. An optical transmission method comprising:
demultiplexing a frame signal;
modulating the demultiplexed frame signal to a plurality of subcarrier signals of wavelengths that are different from each other;
transmitting the plurality of subcarrier signals; and
switching the subcarrier signal that is one of the plurality of subcarrier signals and at which a failure is detected to a subcarrier signal of a backup wavelength different from the wavelengths of the plurality of subcarrier signals.

10. The optical transmission method according to claim 9,
wherein said switching switches the wavelength of a light beam outputted from one of a plurality of light sources to the backup wavelength, the one of the plurality of light sources being the light source of the subcarrier signal at which the failure is detected.

11. The optical transmission method according to claim 9,
wherein said switching stops an output operation of a light source of the subcarrier signal at which the failure is detected, and starts an output operation of a backup light source.
